# EUROPÄISCHE PATENTSCHRIFT

(11) **EP 3 841 003 B1**
(45) Veröffentlichungstag und Bekanntmachung des Hinweises auf die Patenterteilung: **25.02.2026**
(21) Anmeldenummer: 19737053.9
(22) Anmeldetag: 03.07.2019
(51) Int. Cl.: B62J 17/00

(54) **VERKLEIDUNGSTEIL MIT EINEM BEFESTIGUNGSSYSTEM ZUR BEFESTIGUNG DES VERKLEIDUNGSTEILS AN EINEM MOTORRAD ODER EINEM MOTORROLLER**
TRIM PART WITH A FASTENING SYSTEM FOR FASTENING THE TRIM PART TO A MOTORCYCLE OR TO A MOTOR SCOOTER
ÉLÉMENT D'HABILLAGE AVEC SYSTÈME DE FIXATION SERVANT POUR FIXER L'ÉLÉMENT D'HABILLAGE SUR UNE MOTO OU UN SCOOTER

(30) Priorität: 21.08.2018 DE 102018214044
(43) Veröffentlichungstag der Anmeldung: 30.06.2021
(73) Patentinhaber: Bayerische Motoren Werke Aktiengesellschaft, 80809 München (DE)
(72) Erfinder: PAZULLA, Martin, 82515 Wolfratshausen (DE); KRYCH, Tim, 81825 München (DE)
(86) Internationale Anmeldenummer: PCT/EP2019/067834
(87) Internationale Veröffentlichungsnummer: WO 2020/038638

(56) Entgegenhaltungen:
- EP-A1- 1 662 155
- DE-A1- 102009 033 129
- DE-A1- 102010 025 941
- DE-A1- 19 807 953

## Beschreibung

Die vorliegende Erfindung betrifft ein Verkleidungsteil mit einem Befestigungssystem zur Befestigung des Verkleidungsteils an einem Motorrad oder einem Motorroller.

Motorradverkleidungsteile weisen in der Regel sichtbare Schrauben auf mit denen sie an anderen Bauteilen befestigt werden.

Nachteilig an dieser Befestigung eines Verkleidungsteils ist, dass das Wertigkeitsempfinden für den Kunden vermindert wird.

EP 1 662 155 A1 offenbart ein Kunststoffanbauteil zum Anbau an ein Karosserieelement eines Kraftfahrzeugs. DE 198 07 953 A1 offenbart eine Verbindung zwischen einem Träger, insbesondere einem Karosserieteil eines Kraftfahrzeuges, und einem Plattenelement, insbesondere einer Innenverkleidung. DE 10 2009 033 129 A1 offenbart eine Vorrichtung zur Anbringung eines Verkleidungsteils an einem Karosserieteil eines Kraftfahrzeugs.

Es ist daher Aufgabe der vorliegenden Erfindung, ein einfach zu montierendes Verkleidungsteil eines Motorrads oder Motorrollers bereit zu stellen, das eine stabile Befestigung garantiert und dabei einen optisch hochwertigen Eindruck gewährleistet.

Diese Aufgaben werden mit einer Merkmalskombination gemäß Patentanspruch 1 gelöst.

Erfindungsgemäß wird ein Verkleidungsteil mit einem Befestigungssystem zur Befestigung des Verkleidungsteils an einem Motorrad oder einem Motorroller vorgeschlagen, das wenigstens ein an dem Motorrad oder dem Motorroller anordenbares Befestigungsmittel und eine an dem Verkleidungsteil vorgesehene, mit dem Befestigungsmittel zur Befestigung zusammenwirkende Aufnahme umfasst. In einem Befestigungszustand greift dabei das Befestigungsmittel das Verkleidungsteil fixierend ein. Das Befestigungsmittel weist einen Bundabschnitt und einen an den Bundabschnitt angrenzenden Kopfabschnitt auf. Die Aufnahme umfasst einen Aufnahmeinnenraum zur Aufnahme zumindest des Kopfabschnitts und zumindest einen Fixiersteg, der ausgebildet ist, zur Befestigung um den Bundabschnitt entlang einer Aufschiebeebene geschoben zu werden. Ferner ist der zumindest eine Fixiersteg ausgebildet den Bundabschnitt zumindest abschnittsweise umfänglich zu umgreifen und dabei das Verkleidungsteil in zumindest zwei Richtungen der Aufschiebeebene zu fixieren. Im Befestigungszustand ist der Kopfabschnitt innerhalb des Aufnahmeinnenraums aufgenommen. Der zumindest eine Fixiersteg ist zumindest abschnittsweise auf seiner in den Aufnahmeinnenraum weisenden Oberseite überdeckt und fixiert das Verkleidungsteil in einer dritten, zur Aufschiebeebene senkrechten Richtung.

Dadurch ist das Verkleidungsteil sicher an dem Motorrad oder dem Motorroller fixiert und bei stabiler Befestigung keine Schraube sichtbar. Es ergibt sich eine lösbare Befestigung durch die Flexibilität des Fixierstegs. Im Befestigungszustand umgreift der Fixiersteg den Bundabschnitt des Befestigungsmittels und fixiert zusammen mit dem Kopfabschnitt das Verkleidungsteil formschlüssig. Vorteilhaft daran ist, dass während der Montage das Verkleidungsteil an die Aufschiebeebene gelegt werden kann und entlang dieser Ebene in die Befestigungsposition geführt wird. Ferner bietet der Aufnahmeinnenraum ausreichend Platz für das Befestigungsmittel innerhalb der Aufnahme bzw. des Verkleidungsteils, sodass es von dem Verkleidungsteil umhüllt und somit nicht sichtbar ist.

Erfindungsgemäß ist vorgesehen, dass der Bundabschnitt zylinderförmig und von dem Motorrad oder Motorroller hervorstehbar ausgebildet ist. Die Zylinderform ist dabei optimal zum Umgreifen durch den Fixiersteg geeignet und da das Befestigungsmittel von dem Motorrad oder Motorroller hervor steht ist eine Fixierung durch die Aufnahme des Verkleidungsteils gewährleistet.

Erfindungsgemäß ist das Verkleidungsteil so ausgebildet, dass der Kopfabschnitt in der Aufschiebeebene gesehen einen größeren Querschnitt aufweist als der Bundabschnitt. Weiter vorteilhaft ist es, dass die an den Bundabschnitt angrenzende Fläche des Kopfes eine Anlagefläche für den zumindest einen Fixiersteg bildet. Ein größerer Kopfabschnitt als ein Bundabschnitt bewirkt, dass die Anlagefläche ausgebildet wird, die das System in eine Richtung fixiert, da der Fixiersteg daran anliegt und somit dieser Freiheitsgrad beschränkt ist.

In einer vorteilhaften Variante ist erfindungsgemäß vorgesehen, dass die Aufnahme einstückig an dem Verkleidungsteil ausgebildet ist. Dadurch werden die Teileanzahl sowie der Montageaufwand minimiert und die Festigkeit bzw. Steifigkeit zwischen Verkleidungsteil und Aufnahme verbessert.

In einem Ausführungsbeispiel der Erfindung ist vorgesehen, dass die Aufnahme eine sich von dem Verkleidungsteil weg erstreckende Seitenwand aufweist, an der der zumindest eine Fixiersteg ausgebildet ist. Mittels der Seitenwand bildet die Aufnahme den Aufnahmeinnenraum zur Aufnahme des Kopfabschnitts aus.

Ferner ist eine Ausführung günstig, bei der sich der zumindest eine Fixiersteg von der Seitenwand als Begrenzung des Aufnahmeinnenraums parallel zu der Aufschiebeebene erstreckt. Dies ist optimal für Montage, da auf diese Weise der Fixiersteg an der Motorradfläche entlang in die Montageendposition gleiten kann.

In einer weiteren vorteilhaften Variante ist erfindungsgemäß vorgesehen, dass der Aufnahmeinnenraum eine an den zumindest einen Fixiersteg angrenzende Öffnung zur Aufnahme des Bundabschnitts ausbildet, deren Öffnungsweite gegenüber einer Querschnittsfläche des Bundabschnitts untermaßig ausgebildet ist. Dabei ist die untermaßige Öffnung günstig, da das Verkleidungsteil in der Befestigungsposition mit dem Fixiersteg an dem Bundabschnitt verrastet und fixiert wird.

Das erfindungsgemäße Verkleidungsteil ist in einer Ausführungsvariante ausgebildet, dass der Fixiersteg im Befestigungszustand an dem umgriffenen Bundabschnitt direkt zur Anlage bringbar und lösbar daran verrastbar ist. Das direkte Anliegen des Fixierstegs an dem Bundabschnitt bewirkt eine optimale Fixierung, da sich so kein Spiel zwischen den beiden Komponenten einstellen kann. Ferner ermöglicht ein lösbar verrastbarer Fixiersteg eine einfache Demontage des Verkleidungsteils.

In einer Weiterbildung des vorliegenden Verkleidungsteils ist ferner vorgesehen, dass der Fixiersteg und der Bundabschnitt die gleiche axiale Längenerstreckung aufweisen und der Fixiersteg im Befestigungszustand mit einer axialen Innenfläche direkt an der axialen Anlagefläche des Kopfabschnitts und mit einer Außenfläche direkt an dem Motorrad oder Motorroller anliegt und das Verkleidungsteil formschlüssig an dem Motorrad oder Motorroller fixiert. Dies hat zur Folge, dass sich durch das direkte Anliegen zwischen Fixiersteg und Anlagefläche kein Spiel ergibt und das Verkleidungsteil optimal fixiert ist.

In einer bevorzugten Ausführungsform der Erfindung sind zwei Fixierstege vorgesehen, die jeweils eine zur Öffnung gerichtete Einführschräge aufweisen und zwischen sich einen Einführkanal für den Bundabschnitt bilden, wobei sich eine Öffnungsweite des Einführkanals ausgehend von der Öffnung vergrößert. Dadurch wird die Montage optimiert und erleichtert, da die Öffnung und der Bundabschnitt nicht direkt auf einander treffen müssen und so die Einführschräge dann das Verkleidungsteil zur Öffnung bzw. in die Montageendposition führt.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine perspektivische Ansicht eines Befestigungssystem zur Befestigung eines Verkleidungsteils an einem Motorrad oder einem Motorroller und
- Fig. 2: eine Schnittansicht eines Befestigungssystem zur Befestigung eines Verkleidungsteils an einem Motorrad oder einem Motorroller in einer alternativen Ausführung.

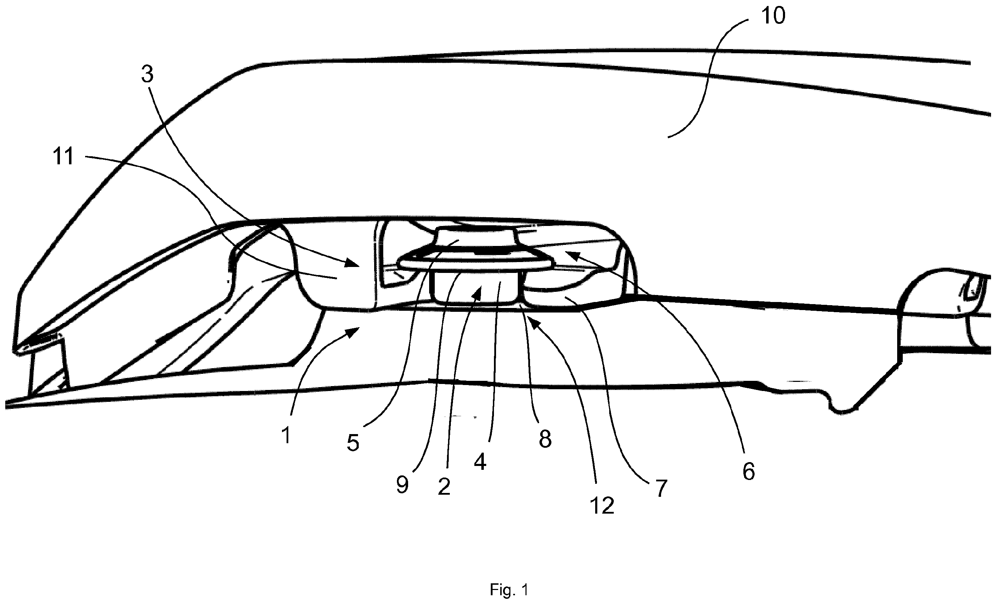

Die Erfindung wird im Folgenden mit Bezug auf die Figur 1 anhand eines exemplarischen Ausführungsbeispiels beschrieben, wobei gleiche Bezugszeichen auf gleiche strukturelle und/oder funktionale Merkmale hinweisen.

In Figur 1 ist eine perspektivische Ansicht eines Befestigungssystems 1 zur Befestigung eines Verkleidungsteils 10 an einem Motorrad oder einem Motorroller in dem Befestigungszustand dargestellt. Es ist eine Aufschiebeebene 8 dargestellt, von der das Befestigungsmittel 2 hervorragt. Dabei erstreckt sich der zylinderförmige Bundabschnitt 4 direkt von einer Außenfläche des Motorrads oder Motorrollers, die in der Aufschiebeebene 8 liegt, weg und der Kopfabschnitt 5 grenzt direkt an den Bundabschnitt 4 an. Der Kopfabschnitt 5 ist schraubenkopfförmig ausgebildet. Ferner weist der Kopfabschnitt 5 in der Aufschiebeebene 8 gesehen einen größeren Querschnitt auf als der Bundabschnitt 4 und bildet so die Anlagefläche 9 aus.

Desweiteren befindet sich das Verkleidungsteil 10 mit der Aufnahme 3 in dem Befestigungszustand. Die Aufnahme 3 liegt mit der Außenfläche zweier Fixierstege 7 direkt an der Aufschiebeebene 8 an und die Innenfläche der Fixierstege 7 grenzt an die Anlagefläche 9 des Kopfabschnitts 5 an. Ferner umgreifen die Fixierstege 7 den Bundabschnitt 4 des Befestigungsmittels 2. Dabei stehen die Fixierstege 7 auch direkt mit dem Bundabschnitt 4 in Kontakt und umgreifen diesen um etwa drei Viertel. Von den Außenflächen der Fixierstege 7 erstreckt sich die Seitenwand 11 der Aufnahme 3 bis zu einer Innenfläche des Verkleidungsteils 10 und ist daran einstückig ausgebildet. Ferner bildet die Aufnahme 3 durch die Seitenwand 11 und den Fixiersteg 7 einen Aufnahmeinnenraum 6 aus. Der Aufnahmeinnenraum 6 bietet ausreichend Platz für die Aufnahme des Kopfabschnitts 5 des Befestigungsmittels 2. Auf diese Weise ist der Kopfabschnitt 5 von der Aufnahme 3 so umhüllt, dass er von außen nicht zu erkennen ist.

Figur 1 zeigt außerdem, dass die beiden Fixierstege 7 jeweils eine Öffnung 12 ausbilden. Desweitern weisen die beiden Fixierstege 7 zur Öffnung 12 gerichtete Einführschrägen auf. Zwischen diesen beiden Einführschrägen bildet sich ein Einführkanal für den Bundabschnitt 5 aus, bei dem sich die Öffnungsweite des Einführkanals ausgehend von der Öffnung 12 vergrößert.

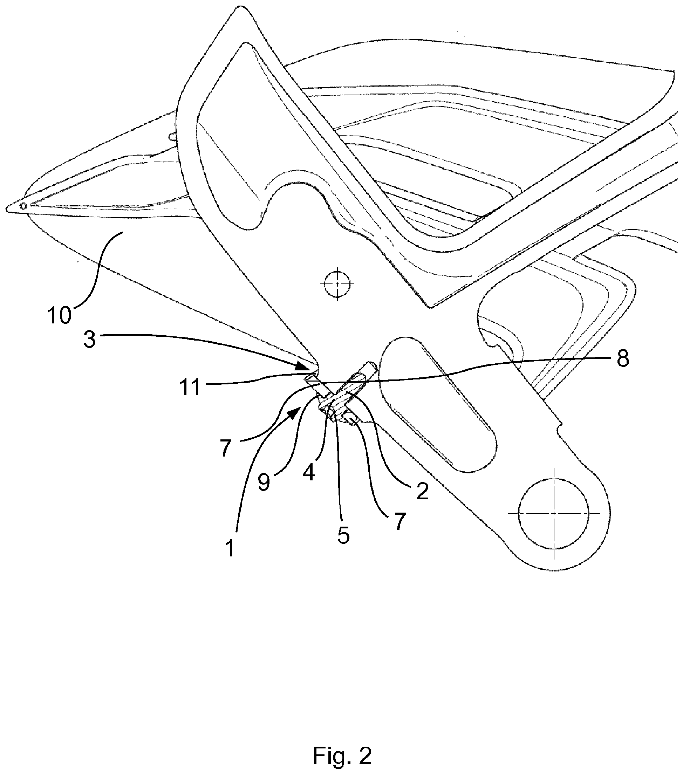

In Figur 2 ist eine Schnittansicht eines Befestigungssystems 1 zur Befestigung eines Verkleidungsteils 10 an einem Motorrad oder einem Motorroller in dem Befestigungszustand dargestellt. Da sich die Ausführung nur geringfügig von der in der Figur 1 beschriebenen Ausführung unterscheidet, wird im Folgenden nur auf die Unterschiede eingegangen. Das Verkleidungsteil 10 mit der Aufnahme 3 befindet sich in dem Befestigungszustand. Im Gegensatz zu Figur 1 grenzt die Aufnahme 3 mit der Innenfläche zweier Fixierstege 7 direkt an der Aufschiebeebene 8 an und die Außenfläche der Fixierstege 7 liegt direkt an der Anlagefläche 9 des Kopfabschnitts 5 an. Dabei kontaktieren die Fixierstege 7 auch direkt den Bundabschnitt 4. Von den Innenflächen der Fixierstege 7 erstreckt sich die Seitenwand 11 der Aufnahme 3 bis zu einer Innenfläche des Verkleidungsteils 10 und ist daran einstückig ausgebildet. Der Kopfabschnitts 5 des Befestigungsmittels 2 befindet sich in dieser Ausführungsvariante in einem von dem Verkleidungsteil 10 verdeckten Bereich, so dass dieser von außen nicht zu erkennen ist und eine weitere den Kopfabschnitts 5 des Befestigungsmittels 2 verdeckende Aufnahme nicht benötigt wird.

In beiden Ausführungsformen gemäß den Figuren 1 und 2 erfolgt die Befestigung des Verkleidungsteils 10, indem es mit der Aufnahme 3 an der Außenfläche des Motorrads oder Motorrollers, die in der Aufschiebeebene 8 liegt, entlang auf das Befestigungsmittel 2 gesteckt wird und an diesem verrastet.

## Patentansprüche

1. Verkleidungsteil (10) mit einem Befestigungssystem (1) zur Befestigung des Verkleidungsteils (10) an einem Motorrad oder einem Motorroller, umfassend wenigstens ein an dem Motorrad oder dem Motorroller anordenbares Befestigungsmittel (2) und eine an dem Verkleidungsteil (10) vorgesehene, mit dem Befestigungsmittel (2) zur Befestigung zusammenwirkende Aufnahme (3), in die in einem Befestigungszustand das Befestigungsmittel (2) fixierend eingreift und wobei das Befestigungsmittel (2) einen Bundabschnitt (4) und einen an den Bundabschnitt (4) angrenzenden Kopfabschnitt (5) aufweist,
und die Aufnahme (3) einen Aufnahmeinnenraum (6) zur Aufnahme zumindest des Kopfabschnitts (5) und zumindest einen Fixiersteg (7) umfasst, wobei eine an den Bundabschnitt (4) angrenzende Fläche des Kopfes (5) eine Anlagefläche (9) für den zumindest einen Fixiersteg (7) bildet
wobei der zumindest eine Fixiersteg (7) ausgebildet ist, zur Befestigung um den Bundabschnitt (4) entlang einer Aufschiebeebene (8) geschoben zu werden und den Bundabschnitt (4) zumindest abschnittsweise umfänglich zu umgreifen und zu kontaktieren, um dabei das Verkleidungsteil (10) in zumindest zwei Richtungen der Aufschiebeebene (8) zu fixieren, wobei das Verkleidungsteil (10) in dem Befestigungszustand derart anordenbar ist, wobei
eine Außenfläche des Motorrads oder Motorrollers in der Aufschiebeebene (8) liegt, wobei das Befestigungsmittel (2) von der Aufschiebeebene (8) hervorragt, wobei der Bundabschnitt (4) zylinderförmig ausgebildet ist und von dem Motorrad oder Motorroller hervorsteht, wobei der Kopfabschnitt (5) in der Aufschiebeebene gesehen einen größeren Querschnitt aufweist als der Bundabschnitt (4)
wobei im Befestigungszustand der Kopfabschnitt (5) innerhalb des Aufnahmeinnenraums (6) aufgenommen ist, der zumindest eine Fixiersteg (7) mit einer Innenfläche an die Anlagefläche (9) des Kopfabschnitts (5) angrenzt und mit einer Außenfläche direkt an der Aufschiebeebene (8) anliegt sowie zumindest abschnittsweise überdeckt ist und dabei das Verkleidungsteil (10) in einer dritten, zur Aufschiebeebene (8) senkrechten Richtung fixiert.

2. Verkleidungsteil (10) mit Befestigungssystem gemäß Anspruch 1, **dadurch gekennzeichnet, dass** die an den Bundabschnitt (4) angrenzende Fläche des Kopfes (5) eine Anlagefläche (9) für den zumindest einen Fixiersteg (7) bildet.

3. Verkleidungsteil (10) mit Befestigungssystem gemäß Anspruch 1 oder 2, **dadurch gekennzeichnet dass** die Aufnahme (3) einstückig an dem Verkleidungsteil (10) ausgebildet ist.

4. Verkleidungsteil (10) mit Befestigungssystem gemäß einem der vorherigen Ansprüche, **dadurch gekennzeichnet, dass** die Aufnahme (3) eine sich von dem Verkleidungsteil (10) weg erstreckende Seitenwand (11) aufweist, an der der zumindest eine Fixiersteg (7) ausgebildet ist.

5. Verkleidungsteil (10) mit Befestigungssystem gemäß einem der vorherigen Ansprüche, **dadurch gekennzeichnet, dass** sich der zumindest eine Fixiersteg (7) von der Seitenwand (11) als Begrenzung des Aufnahmeinnenraums (6) parallel zu der Aufschiebeebene (8) erstreckt.

6. Verkleidungsteil (10) mit Befestigungssystem gemäß einem der vorherigen Ansprüche, **dadurch gekennzeichnet, dass** der Aufnahmeinnenraum eine an den zumindest einen Fixiersteg (7) angrenzende Öffnung (12) zur Aufnahme des Bundabschnitts (4) ausbildet, deren Öffnungsweite gegenüber einer Querschnittsfläche des Bundabschnitts (4) untermaßig ausgebildet ist.

7. Verkleidungsteil (10) mit Befestigungssystem gemäß einem der vorherigen Ansprüche, **dadurch gekennzeichnet, dass** der Fixiersteg (7) im Befestigungszustand an dem umgriffenen Bundabschnitt (4) direkt zur Anlage bringbar und lösbar daran verrastbar ist.

8. Verkleidungsteil (10) mit Befestigungssystem gemäß einem der vorherigen Ansprüche, **dadurch gekennzeichnet, dass** der Fixiersteg (7) und der Bundabschnitt (4) die gleiche axiale Längenerstreckung aufweisen und der Fixiersteg (7) im Befestigungszustand mit einer axialen Innenfläche direkt an der axialen Anlagefläche (9) des Kopfabschnitts (5) anliegt und das Verkleidungsteil (10) formschlüssig an dem Motorrad oder Motorroller fixiert.

9. Verkleidungsteil (10) mit Befestigungssystem gemäß einem der vorherigen Ansprüche, **dadurch gekennzeichnet, dass** zwei Fixierstege (7) vorgesehen sind, die jeweils eine zur Öffnung (12) gerichtete Einführschräge aufweisen und zwischen sich einen Einführkanal für den Bundabschnitt (5) bilden, wobei sich eine Öffnungsweite des Einführkanals ausgehend von der Öffnung (12) vergrößert.

## Claims

1. Fairing part (10) with a fastening system (1) for fastening the fairing part (10) to a motorcycle or a motor scooter, comprising at least one fastening means (2) arrangeable on the motorcycle or the motor scooter and a receptacle (3) provided on the fairing part (10), cooperating with the fastening means (2) for fastening, into which in a fastened state the fastening means (2) engagingly intervenes in a fixing manner, and wherein
the fastening means (2) has a collar section (4) and a head section (5) adjoining the collar section (4),
and the receptacle (3) comprises a receptacle interior space (6) for receiving at least the head section (5) and at least one fixing web (7), wherein a surface of the head (5) adjoining the collar section (4) forms a contact surface (9) for the at least one fixing web (7)
wherein the at least one fixing web (7) is configured to be pushed around the collar section (4) along a pushing-on plane (8) for fastening and to grip and contact the collar section (4) at least in sections circumferentially, in order thereby to fix the fairing part (10) in at least two directions of the pushing-on plane (8), wherein the fairing part (10) in the fastened state is arrangeable in such a way that an outer surface of the motorcycle or motor scooter lies in the pushing-on plane (8), wherein the fastening means (2) protrudes from the pushing-on plane (8), wherein the collar section (4) is formed cylindrically and protrudes from the motorcycle or motor scooter, wherein the head section (5) seen in the pushing-on plane has a larger cross-section than the collar section (4)
wherein in the fastened state the head section (5) is received within the receptacle interior space (6), the at least one fixing web (7) adjoins with an inner surface the contact surface (9) of the head section (5) and abuts with an outer surface directly on the pushing-on plane (8) and is at least sectionally covered and thereby fixes the fairing part (10) in a third direction perpendicular to the pushing-on plane (8).

2. Fairing part (10) with fastening system according to claim 1, **characterized in that** the surface of the head (5) adjoining the collar section (4) forms a contact surface (9) for the at least one fixing web (7).

3. Fairing part (10) with fastening system according to claim 1 or 2, **characterized in that** the receptacle (3) is formed integrally on the fairing part (10).

4. Fairing part (10) with fastening system according to one of the preceding claims, **characterized in that** the receptacle (3) has a side wall (11) extending away from the fairing part (10), on which the at least one fixing web (7) is formed.

5. Fairing part (10) with fastening system according to one of the preceding claims, **characterized in that** the at least one fixing web (7) extends from the side wall (11) as a delimitation of the receptacle interior space (6) parallel to the pushing-on plane (8).

6. Fairing part (10) with fastening system according to one of the preceding claims, **characterized in that** the receptacle interior space forms an opening (12) adjoining the at least one fixing web (7) for receiving the collar section (4), whose opening width is formed undersized relative to a cross-sectional area of the collar section (4).

7. Fairing part (10) with fastening system according to one of the preceding claims, **characterized in that** the fixing web (7) in the fastened state can be brought directly into contact with the gripped collar section (4) and is releasably latchable thereon.

8. Fairing part (10) with fastening system according to one of the preceding claims, **characterized in that** the fixing web (7) and the collar section (4) have the same axial length extension and the fixing web (7) in the fastened state abuts with an axial inner surface directly on the axial contact surface (9) of the head section (5) and fixes the fairing part (10) in a form-fitting manner on the motorcycle or motor scooter.

9. Fairing part (10) with fastening system according to one of the preceding claims, **characterized in that** two fixing webs (7) are provided, which each have an insertion bevel directed toward the opening (12) and form between them an insertion channel for the collar section (5), wherein an opening width of the insertion channel increases starting from the opening (12).

## Revendications

1. Élément de carénage (10) avec un système de fixation (1) pour la fixation de l'élément de carénage (10) à une motocyclette ou un scooter à moteur, comprenant au moins un moyen de fixation (2) pouvant être disposé sur la motocyclette ou le scooter à moteur et un logement (3) prévu sur l'élément de carénage (10), coopérant avec le moyen de fixation (2) pour la fixation, dans lequel dans un état de fixation le moyen de fixation (2) intervient de manière fixante, et dans lequel
le moyen de fixation (2) présente une section de collerette (4) et une section de tête (5) adjacente à la section de collerette (4),
et le logement (3) comprend un espace intérieur de logement (6) pour recevoir au moins la section de tête (5) et au moins une nervure de fixation (7), dans lequel une surface de la tête (5) adjacente à la section de collerette (4) forme une surface d'appui (9) pour la au moins une nervure de fixation (7)
dans lequel la au moins une nervure de fixation (7) est configurée pour être poussée autour de la section de collerette (4) le long d'un plan de poussée (8) pour la fixation et pour entourer et contacter la section de collerette (4) au moins par sections de manière circonférentielle, afin de fixer par là l'élément de carénage (10) dans au moins deux directions du plan de poussée (8), dans lequel l'élément de carénage (10) dans l'état de fixation peut être disposé de telle sorte qu'une surface extérieure de la motocyclette ou du scooter à moteur se trouve dans le plan de poussée (8), dans lequel le moyen de fixation (2) fait saillie du plan de poussée (8), dans lequel la section de collerette (4) est formée de manière cylindrique et fait saillie de la motocyclette ou du scooter à moteur, dans lequel la section de tête (5) vue dans le plan de poussée présente une section transversale plus grande que la section de collerette (4)
dans lequel dans l'état de fixation la section de tête (5) est reçue à l'intérieur de l'espace intérieur de logement (6), la au moins une nervure de fixation (7) est adjacente avec une surface intérieure à la surface d'appui (9) de la section de tête (5) et s'appuie avec une surface extérieure directement sur le plan de poussée (8) et est au moins par sections recouverte et fixe par là l'élément de carénage (10) dans une troisième direction perpendiculaire au plan de poussée (8).

2. Élément de carénage (10) avec système de fixation selon la revendication 1, **caractérisé en ce que** la surface de la tête (5) adjacente à la section de collerette (4) forme une surface d'appui (9) pour la au moins une nervure de fixation (7).

3. Élément de carénage (10) avec système de fixation selon la revendication 1 ou 2, **caractérisé en ce que** le logement (3) est formé d'une seule pièce sur l'élément de carénage (10).

4. Élément de carénage (10) avec système de fixation selon l'une des revendications précédentes, **caractérisé en ce que** le logement (3) présente une paroi latérale (11) s'étendant à partir de l'élément de carénage (10), sur laquelle la au moins une nervure de fixation (7) est formée.

5. Élément de carénage (10) avec système de fixation selon l'une des revendications précédentes, **caractérisé en ce que** la au moins une nervure de fixation (7) s'étend de la paroi latérale (11) en tant que délimitation de l'espace intérieur de logement (6) parallèlement au plan de poussée (8).

6. Élément de carénage (10) avec système de fixation selon l'une des revendications précédentes, **caractérisé en ce que** l'espace intérieur de logement forme une ouverture (12) adjacente à la au moins une nervure de fixation (7) pour recevoir la section de collerette (4), dont la largeur d'ouverture est formée sousdimensionnée par rapport à une surface de section transversale de la section de collerette (4).

7. Élément de carénage (10) avec système de fixation selon l'une des revendications précédentes, **caractérisé en ce que** la nervure de fixation (7) dans l'état de fixation peut être amenée directement en appui sur la section de collerette (4) entourée et peut y être encliquetée de manière détachable.

8. Élément de carénage (10) avec système de fixation selon l'une des revendications précédentes, **caractérisé en ce que** la nervure de fixation (7) et la section de collerette (4) présentent la même extension de longueur axiale et la nervure de fixation (7) dans l'état de fixation s'appuie avec une surface intérieure axiale directement sur la surface d'appui axiale (9) de la section de tête (5) et fixe l'élément de carénage (10) de manière complémentaire sur la motocyclette ou le scooter à moteur.

9. Élément de carénage (10) avec système de fixation selon l'une des revendications précédentes, **caractérisé en ce que** deux nervures de fixation (7) sont prévues, qui présentent chacune un biseau d'introduction dirigé vers l'ouverture (12) et forment entre elles un canal d'introduction pour la section de collerette (5), dans lequel une largeur d'ouverture du canal d'introduction s'agrandit à partir de l'ouverture (12).
